# EUROPEAN PATENT SPECIFICATION

(11) **EP 1 679 160 B1**
(45) Date of publication and mention of the grant of the patent: **05.05.2010**
(21) Application number: 04788472.1
(22) Date of filing: 30.09.2004
(51) Int. Cl.: B25J 19/00

(54) **ORIGIN ADJUSTING DEVICE OF INDUSTRIAL ROBOT**
VORRICHTUNG ZUR EINSTELLUNG EINES AUSGANGSPUNKTS EINES INDUSTRIEROBOTERS
DISPOSITIF DE REGLAGE DE L'ORIGINE D'UN ROBOT INDUSTRIEL

(30) Priority: 03.10.2003 JP 2003345406
(43) Date of publication of application: 12.07.2006
(73) Proprietor: Panasonic Corporation, Kadoma-shi Osaka 571-8501 (JP)
(72) Inventor: IWAI, Seiji, Kawanishi-shi, Hyogo 666-0143 (JP); HIGASHINO, Yukinori, Hyogo 654-0154 (JP)
(74) Representative: Grünecker, Kinkeldey, Stockmair & Schwanhäusser Anwaltssozietät
(86) International application number: PCT/JP2004/014780
(87) International publication number: WO 2005/032772

(56) References cited:
- DE-U1- 29 717 628
- JP-A- 1 135 487
- JP-A- 2 180 580
- JP-A- 3 121 792
- JP-A- 2002 239 967
- JP-U- 4 013 285
- JP-Y1- 31 003 184

## Description

### <Technical Field>

The present invention relates to an industrial robot and more particularly to an origin adjusting apparatus provided at a joint portion of a robot arm.

### <Background Art>

As an origin adjustment apparatus for a conventional industrial robot, there has existed, for example, a conventional origin adjustment apparatus as shown in Fig. 5. (For example, refer to JP-A-2-180580)

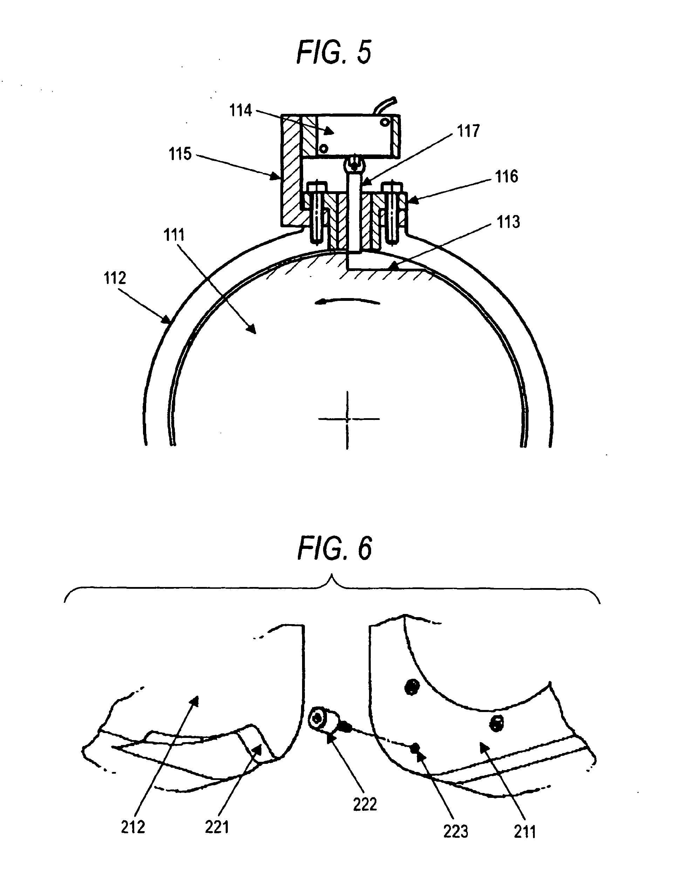

In Fig. 5, a first member 111 and a second member 112 are disposed coaxially and rotate relatively. A stepped portion 113 is formed on a circumferential surface of the first member 111 at an origin corresponding position, and an origin adjustment apparatus is detachably fixed to an origin corresponding position of the second member 112. This origin adjustment apparatus includes a switch holder 115 fixed to the origin corresponding position of the second member 112, a switch means 114 held by the switch holder 15 for generating an origin signal, a linear bearing 116 fixed to the switch holder 115 and a sliding rod 117 formed in such a manner as to be brought into engagement with an ON/OFF needle of the switch means 114 at one end thereof and adapted to slide by the guide of the linear bearing 116 so as to protrude towards the stepped portion 113 at the other end thereof.

In this conventional construction, since the origin adjustment apparatus is made detachable, the origin adjustment apparatus has to be mounted when performing an origin adjustment. Furthermore, a dust proof needs to be provided for a mount portion of the origin adjustment apparatus to deal with dust produced at a site where a robot is used. In addition, as a result of this, the construction becomes complex and the joint member of the robot as well as the origin adjustment apparatus become expensive.

Additionally, since a relatively large space is required to set the origin adjustment apparatus, the miniaturization of the join portion of the robot becomes difficult. In particular, at a wrist shaft of the robot which constitutes an end effector mount portion and the periphery thereof, there is caused a problem that the accessibility of a distal end portion of the wrist shaft of the robot to a workpiece (an object being or to be worked on) is disturbed.

DE-U-297 17 628 discloses a robot with relatively-rotating coaxial first and second members and a positioning member which is embedded in a mount portion so as to only slightly protrude from a guide portion through which it can slide.

In addition, as a second conventional example, there has existed what is to be described below (for example, refer to JP-A-2002-239967). Fig. 6 illustrates a conventional origin adjustment apparatus.

A first member 211 and a second member 212 are provided in such a manner as to rotate relatively, a mount portion 223 is formed on the first member 211 for detachably mounting a positioning member 222 thereon, and an abutment surface 221, which is brought into contact with the positioning member 222, is provided on the second member 212. For example, a positioning pin is provided as the positioning member 222, and a threaded hole, into which the positioning pin can be thread fitted, is provided as the mount portion 223.

In the origin adjustment apparatus illustrated as the second conventional example, while the origin adjustment apparatus is inexpensive, since the positioning member is constructed so as to be thread fitted in the threaded hole and the fixing accuracy of the positioning member depends on to what extent the portion worked on to provide the thread and the portion worked on to provide the pin are coaxial with each other, no high positioning accuracy can be expected.

In addition, in the event that different pins, even of the same kind, are used, since the positioning accuracy deterioration is generated, no stable origin adjustment accuracy can be ensured.

JP-A-4 13285 discloses first and second members which rotate relatively to each other along a common rotation axis, and a positioning member which slides along a guide portion in parallel to the rotation axis.

### <Disclosure of the Invention>

With a view to solving the problems inherent in the conventional examples, in particular dust proof needs and space saving, the invention provides a robot according to claim 1. The positioning member and the guide member along which the positioning member slides adopt a socket and spigot construction which is free from mechanical loosening.

By this construction, an origin adjustment can be realized which is inexpensive and highly accurate and which requires extremely few man hours. Furthermore, since the invention requires no special signal line for origin adjustment due to the construction in which no signal generating device such as a switch is provided, despite the fact that the positioning member is incorporated in the relative rotational member, the invention also has an advantage that no cable needs to be added and modified within the robot machine. In particular, an origin adjustment which is highly accurate and which requires extremely few man hours can be realized even at the most distal end shaft of the wrist where cable layout is made difficult.

### <Brief Description of the Drawings>

Fig. 1 is an explanatory drawing which shows an origin adjustment apparatus portion of an industrial robot according to a first embodiment, which is in a normal operation,.
Fig. 2 is an explanatory drawing which shows the origin adjustment apparatus portion of the industrial robot according to the first embodiment, which is in an origin adjustment operation,.
Fig. 3 is an explanatory drawing which shows an origin adjustment apparatus portion of an industrial robot according to a second embodiment, which is in a normal operation,
Fig. 4 is an explanatory drawing which shows the origin adjustment apparatus portion of the industrial robot according to the second embodiment, which is in an origin adjustment operation,.
Fig. 5 is a drawing showing an origin adjustment apparatus of a conventional industrial robot.
Fig. 6 is a drawing showing an origin adjustment apparatus of another industrial robot.

### <Best Mode for Carrying out the Invention>

Embodiments of the invention will be described below by reference to the drawings.

### (First Embodiment)

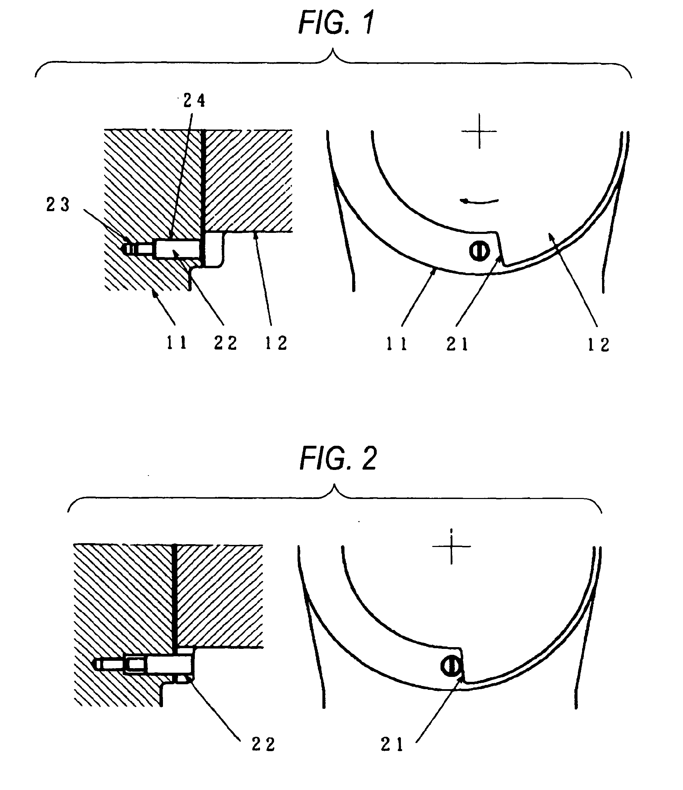

Figs. 1, 2 are drawings showing an origin adjustment apparatus portion of an industrial robot according to a first embodiment. In the drawings, a mount portion 23 in which a positioning member 22 is embedded and a guide portion 24 along which the positioning member 22 slide in such a manner as to protrude are provided on a first member 11, and an abutment portion 21, which is brought into abutment with the positioning member 22 when the first member 11 and a second member 12 are made to rotate relatively, is provided on the second member 12.

Hereinafter, the operation of the industrial robot, which is constructed as described above, will be described. When the industrial robot performs a normal operation, as shown in Fig. 1, the first member 11 and the second member 12 are allowed to perform a free relative rotational operation, and at the same time, the positioning member 22 is embedded in the first member 11 so that a dust proof effect for the positioning member 22 and the guide portion 24 can be exhibited.

When an origin adjustment is needed, as shown in Fig. 2, the positioning member 22 is made to protrude from the first member 11 along the guide portion 24, and the positioning member 22 and the abutment portion 21 are brought into abutment with each other by relatively rotating the first member 11 and the second member 12.

Here, when determining the abutment between the positioning member 22 and the abutment portion 21, a stable determination can be implemented by monitoring a torque generated from a current to a driving motor for rotating relatively the first member 11 and the second member 12. In addition, the determination may be implemented through the sense and vision of the operator who operates the industrial robot.

Next, the positioning member 22 and the abutment member 21 are brought into abutment with each other at a mechanical origin position, and the mechanical origin is registered at this position, whereupon the origin adjustment is completed. Note that in the event that the mechanical origin position differs from the abutment position, a difference therebetween is measured in advance before an origin adjustment becomes necessary, and when performing an origin adjustment, a mechanical origin position is calculated from the abutment position and the difference now known, and the mechanical origin position so calculated is then registered as an origin position, whereby the origin adjustment is completed.

### (Second Embodiment)

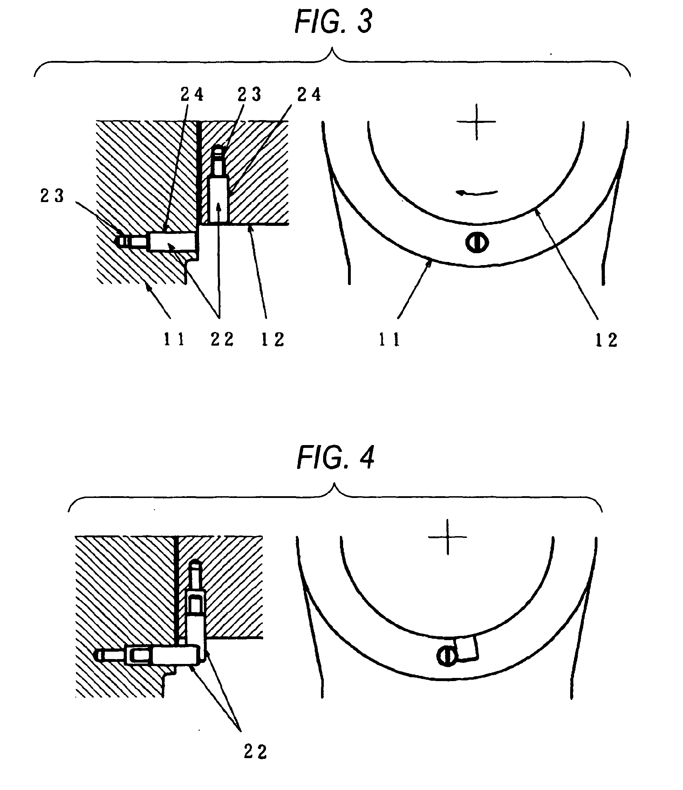

Figs. 3, 4 are drawings showing an origin adjustment apparatus portion of an industrial robot according to a second embodiment of the invention. In Figs. 3, 4, like reference numerals are used as to constituent members like to those described in Figs. 1 and 2, and the description thereof will be omitted.

In this embodiment, in place of the abutment portion 21 provided on the second member 12 in the first embodiment, a positioning member 22, which was provided on the first member, and a guide portion 24 along which the positioning member 22 slides in such a manner as to protrude are provided on a second member, whereby an origin adjustment having the same function as that of the first embodiment can be realized by adopting the construction.

In the first embodiment, the abutment portion 21 is exposed to the outside, and this location needs to be protected against dust in order to perform a highly accurate origin adjustment. In this embodiment, however, the abutment portion 21 is eliminated, and as shown in Fig. 3, the positioning member 22 and the guide portion 24 are embedded when the robot performs a normal operation, and since this provides a complete dust proof construction, a stable origin adjustment can be realized over a long period of time.

### <Industrial Applicability>

Since the industrial robot according to the invention is simple in construction and can perform a highly accurate origin adjustment, the robot is effective, in particular, when applied to an industrial manufacturing robot for use in production lines.

## Claims

1. An industrial robot comprising a first member (11) and a second member (12) which rotate relatively and are disposed coaxially at a joint portion thereof; the first member (11) including:
a first mount portion where a first positioning member (22) is embedded and
a first guide portion (24) along which the first positioning member slides in such a manner as to protrude; and
the second member (12) including:
an abutment portion (21) which can be brought into abutment with the protruding first positioning member (22) when the first and second members (11,12) are made to rotate relatively,
wherein the first positioning member (22) and the first guide portion (24) adopt a socket and spigot construction which is free from mechanical loosening, and the first positioning member (22) is embedded and protruded in parallel to the axis of rotation of the relatively-rotating first member (11) and second member (12), wherein the first positioning member (22) is holdable at a position where the first positioning member does not protrude from the first guide portion (24) when a normal operation is performed, whereas when an origin adjustment is performed, the first positioning member is capable to protrude from the first guide portion (24) in a state where at least a part of the first positioning member abuts on the first guide portion (24).

2. An industrial robot as set forth in Claim 1, wherein the abutment portion (21) of the second member (12) includes:
a second mount portion where a second positioning member is embedded; and
a second guide portion along which the second positioning member slides in
such a manner as to protrude,
wherein the second positioning member and the second guide portion adopt a socket and spigot construction which is free from mechanical loosening wherein the first and second positioning members (22) are held at a position where the first and second positioning members do not protrude from the first and second members (11,12) respectively, when performing the normal operation, whereas when performing the origin adjustment, the first and second positioning members are made to protrude from the first and second members (11,12) in a state where at least a part of the first and second positioning members abuts on the first and second guide portions.

3. An industrial robot as set forth in Claim 1, wherein the first positioning member is brought into abutment at a mechanical origin position of the industrial robot.

4. An industrial robot as set forth in Claim 1, further comprising calculation means for bringing the first positioning member into abutment at a position which is displaced from a mechanical origin position through a known angle determined in advance and calculating the mechanical origin position using the known angular displacement and the abutment position of the first positioning member.

5. An industrial robot as set forth in Claim 1, wherein the abutment of the first positioning member is determined by monitoring a torque generated in the second member using a current to a driving motor for relatively rotating the second member.

## Patentansprüche

1. Industrieroboter, umfassend ein erstes Glied (11) und ein zweites Glied (12), die sich relativ zueinander drehen und koaxial an einem Zusammenfügeabschnitt hiervon angeordnet sind;
wobei das erste Glied (11) beinhaltet:
einen ersten Anbringabschnitt, in dem ein erstes Positionierglied (22) eingebettet ist, und
einen ersten Führungsabschnitt (24), an dem entlang das erste Positionierglied derart gleitet, dass es vorsteht; und
das zweite Glied (12) beinhaltet:
einen Anlageabschnitt (21), der mit dem vorstehenden ersten Positionierglied (22) in Anlage gebracht werden kann, wenn die ersten und zweiten Glieder (11, 12) zu einer Drehung relativ zueinander veranlasst werden, wobei das erste Positionierglied (22) und der erste Führungsabschnitt (24) einen Aufbau aus Sockel und Zapfen einsetzen, bei dem keine mechanische Lockerung auftritt, und das erste Positionierglied (22) eingebettet ist und parallel zu der Drehachse des sich relativ drehenden ersten Gliedes (11) und zweiten Gliedes (12) vorsteht, wobei das erste Positionierglied (22) an einer Position gehalten werden kann, in der das erste Positionierglied nicht von dem ersten Führungsabschnitt (24) vorsteht, wenn ein Normalbetrieb durchgeführt wird, wohingegen dann, wenn eine Ursprungseinstellung durchgeführt wird, das erste Positionierglied in der Lage ist, von dem ersten Führungsabschnitt (24) in einem Zustand vorzustehen, in dem wenigstens ein Teil des ersten Positioniergliedes an dem ersten Führungsabschnitt (24) anliegt.

2. Industrieroboter nach Anspruch 1, wobei der Anlageabschnitt (21) des zweiten Gliedes (12) beinhaltet:
einen zweiten Anbringabschnitt, in dem ein zweites Positionierglied eingebettet ist; und
einen zweiten Führungsabschnitt, an dem entlang das zweite Positionierglied derart gleitet, dass es vorsteht,
wobei das zweite Positionierglied und der zweite Führungsabschnitt einen Aufbau aus Sockel und Zapfen einsetzen, bei dem keine mechanische Lockerung auftritt,
wobei die ersten und zweiten Positionierglieder (22) an einer Position gehalten werden, in der die ersten und zweiten Positionierglieder nicht von den ersten beziehungsweise zweiten Gliedern (11, 12) vorstehen, wenn der Normalbetrieb durchgeführt wird, wohingegen dann, wenn die Ursprungseinstellung durchgeführt wird, die ersten und zweiten Positionierglieder veranlasst werden, von den ersten und zweiten Gliedern (11, 12) in einem Zustand vorzustehen, in dem wenigstens ein Teil der ersten und zweiten Positionierglieder an den ersten und zweiten Führungsabschnitten anliegt.

3. Industrieroboter nach Anspruch 1, wobei das erste Positionierglied an einer mechanischen Ursprungsposition des Industrieroboters in Anlage gebracht wird.

4. Industrieroboter nach Anspruch 1, des Weiteren umfassend Berechnungsmittel, die das erste Positionierglied an einer Position in Anlage bringen, die von einer mechanischen Ursprungsposition um einen vorab bestimmten bekannten Winkel versetzt ist, und die mechanische Ursprungsposition unter Verwendung der bekannten Winkelversetzung und der Anlageposition des ersten Positioniergliedes berechnen.

5. Industrieroboter nach Anspruch 1, wobei die Anlage des ersten Positioniergliedes durch Überwachen eines Drehmomentes aus der Erzeugung in dem zweiten Glied unter Verwendung eines Stromes für einen Antriebsmotor zur Relativdrehung des zweiten Gliedes bestimmt wird.

## Revendications

1. Robot industriel comprenant un premier élément (11) et un second élément (12) tournant relativement l'un par rapport à l'autre et agencés de manière coaxiale autour d'une section articulée ;
le premier élément (11) comprenant :
une première section de montage où un premier élément de positionnement (22) est incorporé et
une première section de guidage (24) le long de laquelle le premier élément de positionnement glisse de manière à déborder ; et
le second élément (12) comprenant :
une section de butée (21) qui peut être amenée à butée contre le premier élément de positionnement débordant (22) lorsque les premier et second éléments (11,12) sont mis en rotation relativement l'un par rapport à l'autre, dans lequel le premier élément de positionnement (22) et la première section de guidage (24) adoptent une construction à raccord par emboîtement ne permettant pas de desserrage mécanique, et le premier élément de positionnement (22) est incorporé et déborde parallèlement à l'axe de rotation des premier élément (11) et second élément (12) tournant relativement l'un par rapport à l'autre,
dans lequel le premier élément de positionnement (22) peut être maintenu dans une position où le premier élément de positionnement ne déborde pas de la première section de guidage (24) en fonctionnement normal, alors que quand un réglage d'origine est effectué, le premier élément de positionnement peut déborder de la première section de guidage (24) dans un état où au moins une partie du premier élément de positionnement vient à butée contre la première section de guidage (24).

2. Robot industriel selon la revendication 1, dans lequel la section de butée (21) du second élément (12) comprend :
une seconde section de montage où un second élément de positionnement est incorporé ; et
une seconde section de guidage le long de laquelle le second élément de positionnement glisse de manière à déborder,
dans lequel le second élément de positionnement et la seconde section de guidage adoptent une construction à raccord par emboîtement ne permettant pas de desserrage mécanique,
dans lequel les premier et second éléments de positionnement (22) sont maintenus dans une position où les premier et second éléments de positionnement ne débordent pas respectivement des premier et second éléments (11,12) lors d'un fonctionnement normal, alors qu'en effectuant un ajustement d'origine, les premier et second éléments de positionnement sont adaptés pour déborder des premier et second éléments (11,12) dans un état où au moins une partie des premier et second éléments de positionnement vient à butée contre les première et seconde sections de guidage.

3. Robot industriel selon la revendication 1, dans lequel le premier élément de positionnement est amené à butée dans une position initiale mécanique du robot industriel.

4. Robot industriel selon la revendication 1, comprenant en outre un moyen de calcul pour amener le premier élément de positionnement à butée dans une position décalée par rapport à une position initiale mécanique selon un angle connu prédéterminé et pour calculer la position initiale mécanique à l'aide d'un déplacement angulaire connu et de la position de butée du premier élément de positionnement.

5. Robot industriel selon la revendication 1, dans lequel la butée du premier élément de positionnement est déterminée en surveillant un couple de forces généré dans le second élément en utilisant un courant alimentant un moteur d'entraînement pour faire tourner relativement le second élément.
